**Europäisches Patentamt**

**European Patent Office**

**Office européen des brevets**

(19)

(11) Numéro de publication : **0 305 299 B1**

(12) # FASCICULE DE BREVET EUROPEEN

(45) Date de publication du fascicule du brevet :
20.03.91 Bulletin 91/12

(51) Int. Cl.⁵ : **B62D 53/00, B62D 53/02, B60D 1/14**

(21) Numéro de dépôt : 88402168.4

(22) Date de dépôt : 26.08.88

(54) **Véhicule articulé modulaire évoluant parmi des obstacles, et élément modulaire composant ce véhicule.**

(30) Priorité : 28.08.87 FR 8712029

(43) Date de publication de la demande :
01.03.89 Bulletin 89/09

(45) Mention de la délivrance du brevet :
20.03.91 Bulletin 91/12

(84) Etats contractants désignés :
DE GB IT

(56) Documents cités :
FR-A- 1 368 678
US-A- 3 246 714
US-A- 4 127 202

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Littmann, François 2, rue Marco Polo F-78180 Montigny le Bretonneux (FR)** Inventeur : **Villedieu, Eric 148, rue de Paris F-91120 Palaiseau (FR)**

(74) Mandataire : **Mongrédien, André et al c/o BREVATOME 25, rue de Ponthieu F-75008 Paris (FR)**

EP 0 305 299 B1

## Description

La présente invention a pour objet un véhicule articulé modulaire évoluant parmi des obstacles, ainsi qu'un élément modulaire entrant dans la composition de ce véhicule.

Divers véhicules ont été déjà conçus pour permettre d'explorer ou de circuler dans des milieux difficiles ou hostiles : fonds sous-marins, surface des planètes du système solaire, enceintes nucléaires ou polluées, stations de métro par exemple. Ces milieux sont tous caractérisés par la présence de passages difficiles, qui peuvent être des accidents de terrain, des fortes pentes ou des escaliers, des dénivellations, des couloirs resserrés, des virages importants et des angles. Si on veut limiter l'encombrement de ces véhicules en largeur pour leur permettre d'évoluer dans des passages resserrés et en hauteur pour leur conserver une bonne stabilité mise en péril dans le cas de pentes, il est nécessaire d'étaler leur chargement en longueur ; une construction formée de modules articulés est alors nécessaire pour permettre au véhicule de virer.

Les véhicules chenillés fréquemment utilisés, même ceux munis de quatre chenilles qui dépassent vers l'avant et vers l'arrière du véhicule et qui pivotent autour d'axes transversaux, modifiant ainsi l'angle qu'elles font avec le corps du véhicule notamment pour négocier un changement de pente, sont donc insuffisants ici à cause de l'encombrement longitudinal dû à ces chenilles. D'ailleurs ils consomment beaucoup d'énergie et tournent plutôt mal à cause des frottements différents, importants et difficiles à évaluer sur chaque chenille.

On a déjà proposé, un véhicule tout à fait différent, surnommé "lombric" à cause de son déplacement par péristaltisme : des modules reposant sur le sol par des pattes sont reliés par des systèmes articulés formés de crics mis en action par trois vérins. Chaque système articulé se contracte tour à tour pour attirer le module auquel il est relié à l'arrière vers l'avant tout en le soulevant légèrement du sol ; le système articulé voisin, situé à l'arrière du module soulevé et qui avait été pareillement contracté immédiatement auparavant, s'allonge simultanément et reprend son état initial. Le module soulevé reprend ensuite contact avec le sol, et le module situé immédiatement à l'avant subit des opérations analogues. Le déplacement se propage petit à petit le long du véhicule.

Ce "lombric" possède une bonne stabilité et une souplesse suffisante pour lui permettre d'entrer dans des couloirs sinueux ; il est encore possible d'utiliser sa partie arrière comme appui pour soulever l'avant et gravir un obstacle sans contact avec celui-ci. En contrepartie, la locomotion péristaltique est lente et les systèmes articulés compliqués et volumineux.

Une autre conception de véhicule utilise des modules sur roues reliées par des barres élastiques. Ce mode d'articulation est toutefois purement passif, sans possibilité d'intervention ou de contrôle, et l'ensemble est trop souple à cause du nombre excessif de degrés de liberté passifs.

Le véhicule suivant l'invention ne possède pas ces divers inconvénients et associe les avantages de la locomotion sur roues : robustesse, rapidité et faible consommation d'énergie, à ceux dus à une répartition judicieuse des degrés de liberté et à une articulation particulièrement simple entre les modules qui le constituent. Le véhicule pris en bloc peut selon le cas être souple ou rigide, lui permettant de franchir les obstacles les plus divers. Toutefois, le véhicule selon l'invention possède ces avantages grâce aux modules ou éléments modulaires qui le constituent, qui sont également de conception originale et constituent un autre objet de l'invention.

L'articulation choisie pour unir les éléments modulaires est celle retenue par le brevet antérieur US-A-4 127 202. Mais le véhicule antérieur, s'il possède une très bonne souplesse sur route, n'est pas censé se déplacer verticalement sur des escaliers ou par-dessus des obstacles, comme on se propose de le faire avec l'invention.

L'invention se réfère à un élément modulaire de véhicule articulé connu comprenant un châssis de forme générale rectangulaire et comprenant des portions avant, arrière, gauche et droite, deux essieux concourants transversaux, porteurs d'une roue chacun et tournant indépendamment dans des premiers paliers situés respectivement sur les portions gauche et droite, ainsi qu'une motorisation débrayable agissant sur les roues et quatre articulations d'axe vertical situées à des extrémités gauche et droite des portions avant et arrière destinées à recevoir des barres articulées d'attelage avec des éléments modulaires adjacents semblables.

Cet élément modulaire est caractérisé selon la présente invention en ce qu'il comprend une plateforme en rotation autour des essieux dans deux deuxièmes paliers par rapport au châssis ainsi qu'un système de réglage, comprenant un moteur de plateforme et un détecteur de cette rotation, le châssis étant constitué de deux parties articulées entre elles autour d'un axe parallèle aux essieux, cet axe étant de préférence confondu avec l'axe des essieux selon un angle de déformation variable.

Dans une réalisation particulière, les articulations pour barres articulées sont disposées sur des traverses respectives avant et arrière dont l'une pivote par rapport au châssis autour d'un axe horizontal perpendiculaire aux essieux et situé à mi-chemin des articulations gauche et droite.

Afin de faciliter la maintenance de l'élément modulaire et de consacrer l'espace transversal médian à la charge utile, les roues comprennent une jante de roulement large reliée à l'essieu par un disque plein disposé à l'extérieur de la jante ; les moteurs sont alors disposés dans le volume creux délimité par la jante et le disque, où ils sont bien abrités et protégés.

L'invention a également pour objet le véhicule constitué par plusieurs de ces éléments modulaires assemblés en chaîne de façon à définir un élément de tête, un élément de queue et des éléments intermédiaires, d'attelages assemblant les éléments et constitués chacun de deux barres articulées aux deux extrémités, une première barre sur l'articulation gauche de la portion arrière du châssis d'un élément de véhicule antérieur et sur l'articulation droite de la portion avant du châssis d'un élément de véhicule postérieur, une seconde barre sur l'articulation droite de la portion arrière du châssis de l'élément de véhicule antérieur et sur l'articulation gauche de la portion avant du châssis de l'élément de véhicule postérieur, et d'un système de pilotage d'ensemble permettant d'agir sur les moteurs et de commander leur débrayage.

On va maintenant décrire l'invention plus en détail à l'aide des figures suivantes, annexées à titre illustratif et nullement limitatif :

– la figure 1 est une vue schématique de dessus d'un élément modulaire,

– les figures 2A et 2B sont deux vues de dessus en coupe partielle de l'agencement proche d'une roue respectivement gauche et droite d'un élément modulaire,

– la figure 3 est une vue latérale en coupe partielle de l'agencement proche d'une roue d'un élément modulaire,

– la figure 4 est une vue en perspective d'une charnière utilisée pour l'articulation de deux éléments modulaires voisins,

– la figure 5 est une vue longitudinale de la charnière,

– la figure 6 est une vue de dessus de la charnière,

– la figure 7 est une vue de dessus synthétique des différentes grandes parties d'un élément modulaire,

– la figure 8 est une coupe de côté d'une roue d'un élément modulaire,

– la figure 9 est une vue de face de cette roue,

– la figure 10 est une vue de dessus d'un véhicule articulé formé de plusieurs éléments modulaires quand il effectue des virages successifs,

– la figure 11 est une vue en perspective du véhicule articulé quand il monte un escalier,

– les figures 12A à 12I illustrent en vue de côté le véhicule articulé quand il franchit un obstacle ponctuel surélevé, et

– les figures 13A à 13D illustrent un véhicule en train de se redresser après avoir versé.

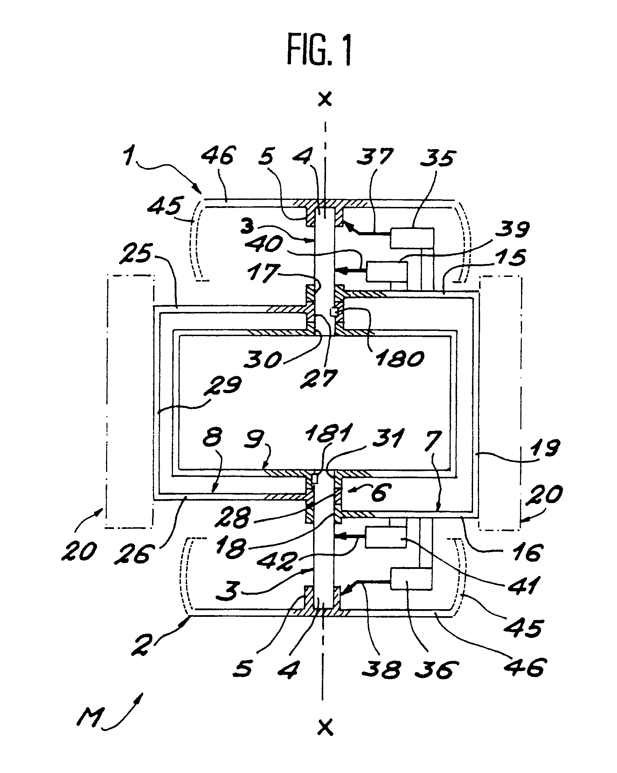

L'élément modulaire ou module M de la figure 1 est composé de plusieurs parties principales : deux roues 1 et 2 de même axe de rotation X et situées à gauche et à droite du module M, deux essieux 3 dont une extrémité 4 constitue la fusée dans laquelle le moyeu 5 de chaque roue 1 ou 2 est inséré et tourne, un châssis 6 formé de deux parties 7 et 8 appelées châssis avant et châssis arrière et pouvant toutes deux tourner autour des essieux 3, et une plate-forme 9 tournant également autour des essieux 3.

Le châssis 6 a un contour général rectangulaire ; le châssis avant 7 est constitué de deux poutres longitudinales 15 et 16 symétriques munies à une extrémité d'un palier respectif 17 et 18 leur permettant de tourner autour d'un essieu 3 et réunies à leur autre extrémité par une traverse 19, dépassant légèrement du châssis 6 par l'avant, et portant une charnière 20 sur laquelle on reviendra plus loin.

Le châssis arrière 8 est pareillement composé de deux poutres longitudinales 25 et 26 symétriques munies à une extrémité d'un palier respectif 27 et 28 leur permettant de tourner autour d'un essieu 3 et réunies à leur autre extrémité par une traverse 29, dépassant légèrement des roues 1 et 2 par l'arrière et portant également une charnière 20.

Plus précisément, les poutres longitudinales 15 et 25 sont situées du côté gauche du module M et les poutres longitudinales 16 et 26 du côté droit.

Les poutres longitudinales 25 et 26 du châssis arrière 8 sont situées entre les poutres longitudinales 15 et 16 du châssis avant 8 ; la plate-forme 9 est sensiblement rectangulaire, située entre les poutres longitudinales 25 et 26 du châssis arrière 8 d'une part et les deux traverses 19 et 29 d'autre part ; elle tourne autour des essieux 3 par deux paliers 30 et 31 respectivement sur l'essieu 3 à gauche et à droite. L'essieu 3 à gauche est relié en rotation au palier 27 du châssis arrière 8 par un système de liaison 180, et l'essieu 3 à droite est relié en rotation au palier 31 de la plate-forme 9 par un autre système de liaison 181. Ces systèmes de liaison 180 et 181 seront décrits plus loin.

Les roues gauche et droite 1 et 2 sont mues indépendamment, chacune par un moteur de roue 35 ou 36 débrayable au moyen d'une transmission 37 ou 38 qui entraîne en rotation chacun des moyeux 5. Un moteur de châssis 39, débrayable à l'aide d'une transmission 40, entraîne en rotation l'essieu 3 à gauche et donc le châssis arrière 8 ; un moteur de plate-forme 41, à l'aide d'une transmission 42, entraîne en rotation l'essieu 3 à droite et la plate-forme 9. Les quatre moteurs 35, 36, 39 et 41 sont tous fixés au châssis avant 7 ; les moteurs de roue gauche 35 et de châssis 39, ainsi que leurs transmissions, sont entre le châssis avant 7 et la roue gauche 1 ; les moteurs de roue droite 36 et de plate-forme 41, ainsi que leurs transmissions, sont entre le châssis avant 7 et la roue droite 2. Plus exactement, comme chaque roue 1 et 2 comprend une jante de roulement 45 assez large reliée au moyeu 5 par un disque plein (c'est-à-dire sans rayons) 46, ce disque 46 étant à l'extérieur dans le sens transversal, de la jante 45 et du moyeu 5, les moteurs et leurs transmissions sont situés dans le volume creux délimité par la jante 45 et le disque 46. Ils y sont abrités et protégés tout en étant d'accès facile pour une maintenance, car il suffit alors de démonter la roue 1 ou 2. De plus, cet agencement permet de pouvoir consacrer l'espace transversal médian à la charge utile du module M que la plate-forme 9 est destinée à porter.

En résumé, on peut considérer le châssis avant 7 comme l'élément de référence du module puisque les moteurs y sont fixés. Les moteurs de roue 35 et 36 assurent les déplacements du module, le moteur de châssis 39 règle l'angle formé par les châssis avant 7 et arrière 8, et le moteur de plate-forme 41 règle l'inclinaison de cette dernière par rapport au châssis avant 7.

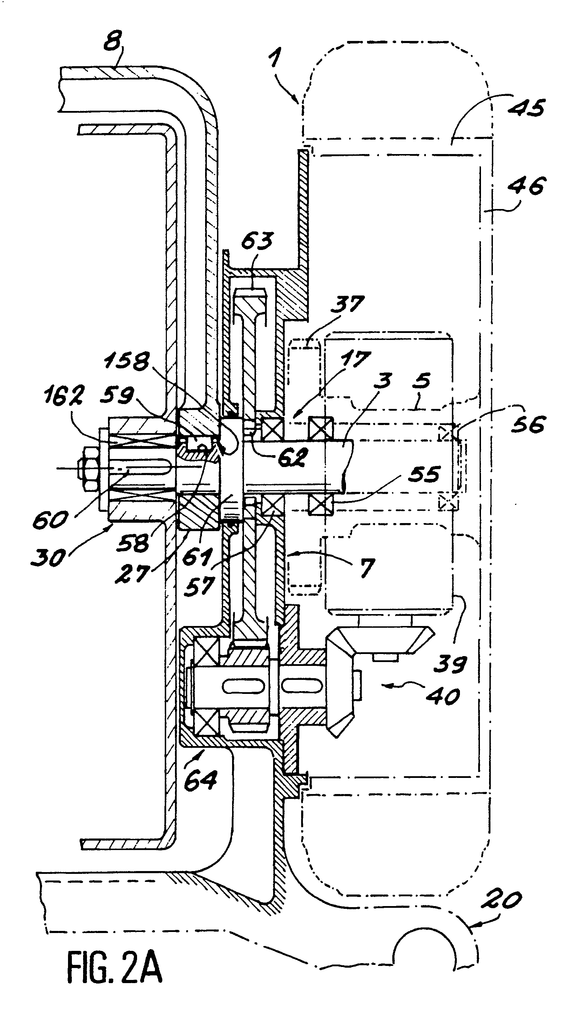

La figure 2A explicite le montage de ces différentes pièces sur l'essieu 3 à gauche. Le moyeu 5 de la roue gauche 1 tourne autour de l'essieu 3 à gauche par l'intermédiaire d'un palier à deux roulements à billes 55 et 56 ; une roue dentée, fixée au moyeu 5 près du châssis avant 7, constitue l'extrémité de la transmission 37, dont le reste n'est pas représenté.

Le palier 17 du châssis avant 7 comprend un roulement à billes 57 entre l'essieu 3 et le châssis avant 7 ; le palier 27 du châssis arrière 8 comprend une clavette 59 logée dans des rainures 58 sur l'essieu 3 et 158 sur le châssis arrière 8. Ces rainures 58 et 158 ainsi que la clavette 59 constituent le système de liaison 180. Le palier 30 de la plate-forme 9 est constitué par un roulement 162 permettant à l'essieu 3 à gauche de tourner par rapport à la plate-forme 9. Toutefois, l'essieu 3 est pourvu d'une rainure de clavette 60 inoccupée.

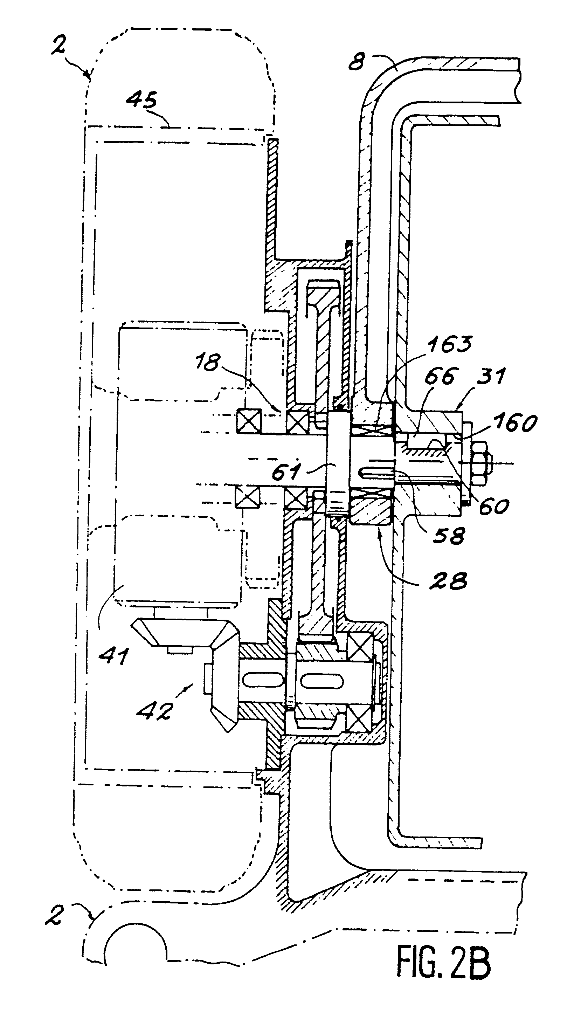

L'essieu 3 comprend un épaulement 61 entre les paliers 17 et 27 des châssis avant 7 et arrière 8. Cet épaulement est pourvu, sur sa face latérale dirigée vers le palier 17 du châssis avant 7, de dents de clabot 62 aptes à maintenir en place une roue dentée 63, qui est la dernière de la transmission 40 du moteur de châssis 39 qui, comme le montre la figure 2, est logé sous le moyeu 5. Un flasque 64, alésé pour laisser tourner avec jeu l'épaulement 61, est monté sur le châssis avant 7 du coté transversal interne, et il entoure la roue dentée 63.

Les côtés gauche et droit sont presque entièrement symétriques, ce qui a été voulu pour faciliter la fabrication et rendre les pièces interchangeables. C'est ce que montre la figure 2B. Les seules différences se rapportent à l'absence d'une clavette symétrique de la clavette 59 : l'essieu 3 à droite est en effet lié au châssis arrière 8 par un roulement 163 qui permet leur rotation relative ; par contre, il n'existe pas de roulement dans le palier 31, mais une rainure de clavette 160 dans l'alésage de la plate-forme 9. Une clavette 66 est disposée dans les rainures 60 et 160 et lie donc en rotation l'essieu 3 à droite et la plate-forme 9. La clavette 66 et les rainures 60 et 160 constituent l'autre système de liaison 181.

Bien entendu, les références numériques différentes de la figure 1, introduites pour distinguer des pièces et éléments similaires situés à gauche et à droite, se retrouvent sur les figures 2A et 2B, mais la structure du module est symétrique. En particulier, les moteurs de châssis 39 et de plate-forme 41 sont identiques et situés en des emplacements symétriques sous les moyeux 5 même s'ils remplissent des fonctions différentes. De même pour leurs transmissions 40 et 42, ainsi que pour les moteurs de roue 35 et 36 et leurs transmissions 37 et 38, quoique ces derniers éléments ne soient pas représentés sur les figures 2A et 2B.

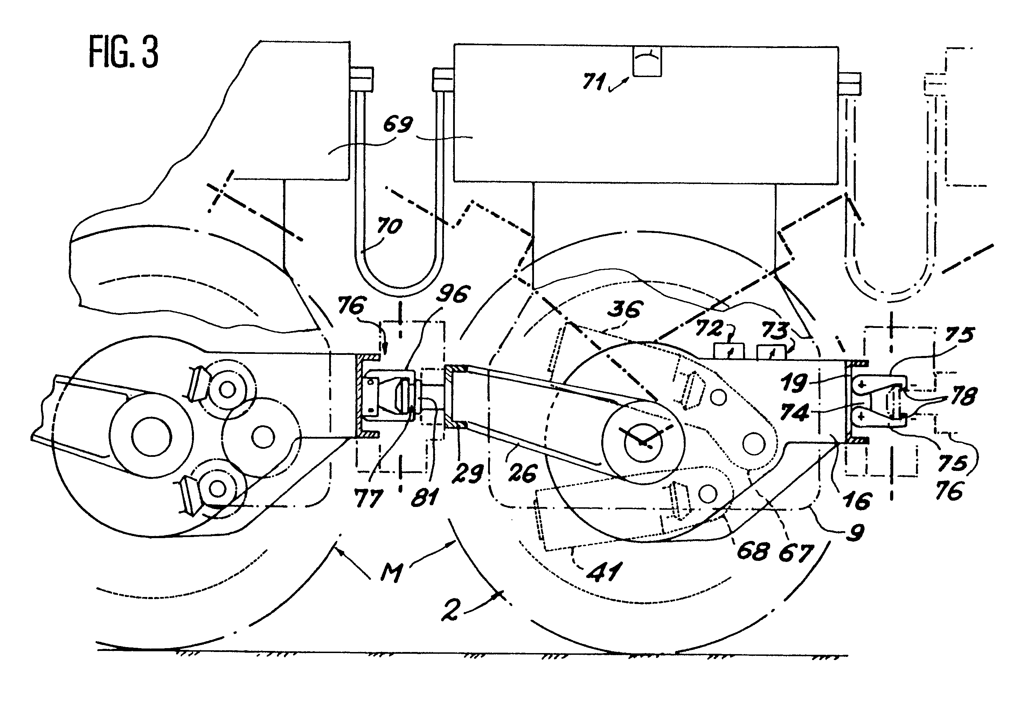

On se reporte maintenant à la figure 3 qui montre plusieurs modules M assemblés. La roue droite 2 est esquissée ; le moteur de roue 36 et le moteur de plate-forme 41 sont reliés par deux bâtis 67 et 68 à la poutre longitudinale droite 16 du châssis avant 7. La plate-forme 9 porte une charge utile qui est enfermée dans un conteneur 69 et qui peut comprendre, selon le cas, le système de pilotage automatique du véhicule, l'approvisionnement en énergie, de l'outillage télémanipulable ou de la matière à véhiculer. Le cas échéant, des canalisations ou des câbles flexibles 70 unissent deux conteneurs 69 voisins. Des détecteurs d'inclinaison de tangage 71 et 72 sont par ailleurs fixés sur le conteneur 69 et le châssis avant 7, ainsi qu'un détecteur de roulis 73 sur le châssis avant 7. Dans le cas d'un véhicule automatique, des détecteurs d'obstacles, non représentés ici, sont installés sur le module M de tête ; ils peuvent comprendre par exemple des émetteurs de rayonnement infrarouge en éventail pour distinguer les changements de pente et des détecteurs de proximité frontaux et latéraux pour repérer les obstacles rencontrés. Tous les détecteurs mentionnés sont connus en eux-mêmes et ne méritent pas de commentaire particulier ; ils sont reliés, de même que les divers moteurs de roue 35 et 36, de châssis 39 et de plate-forme 41, au système de pilotage du véhicule par des lignes électriques non représentées en détail.

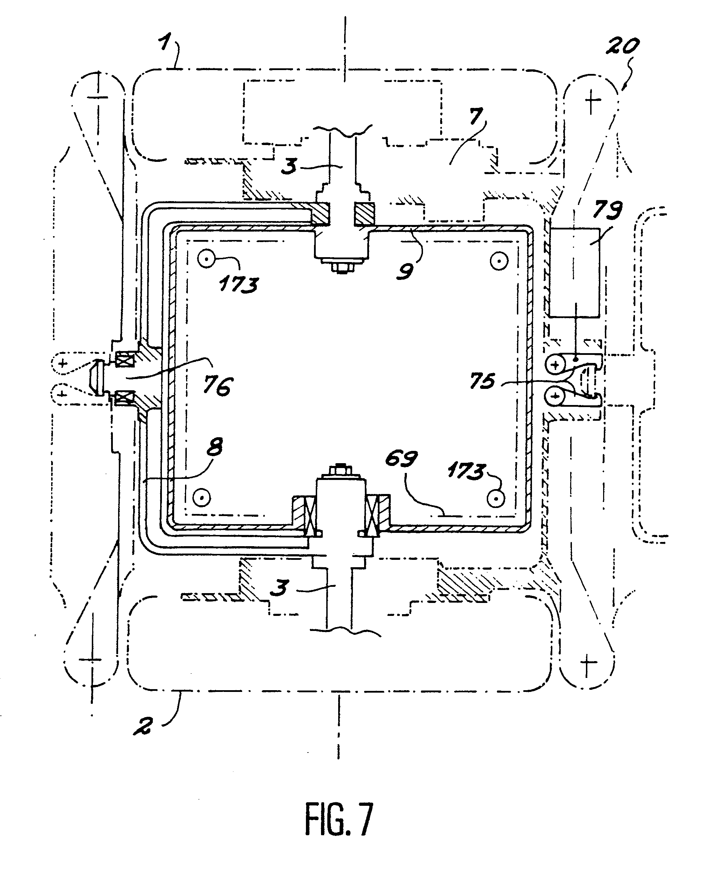

La traverse 19 du châssis avant 7 est munie d'un bossage 74 équipé de mors 75 rabattables par pivotement. Ils peuvent être, comme on le voit également sur la figure 7, au nombre de quatre et sont commandés par un système asservi 79 obéissant au système de pilotage. Ils viennent coincer, une fois rabattus, l'extrémité arrière d'un raccordement 76 à l'arrière de la traverse 29 du châssis arrière 8 du module M précédent et qui comprend avantageusement une gorge 77 dans laquelle pénètrent et viennent frotter des extrémités recourbées 78 des mors 75.

Les mors 75 rabattus sur le raccordement 76 permettent de bloquer l'angle de direction (lacet) que font les deux modules M concernés et de rendre tout virage impossible. L'utilité de cette disposition va apparaître plus loin.

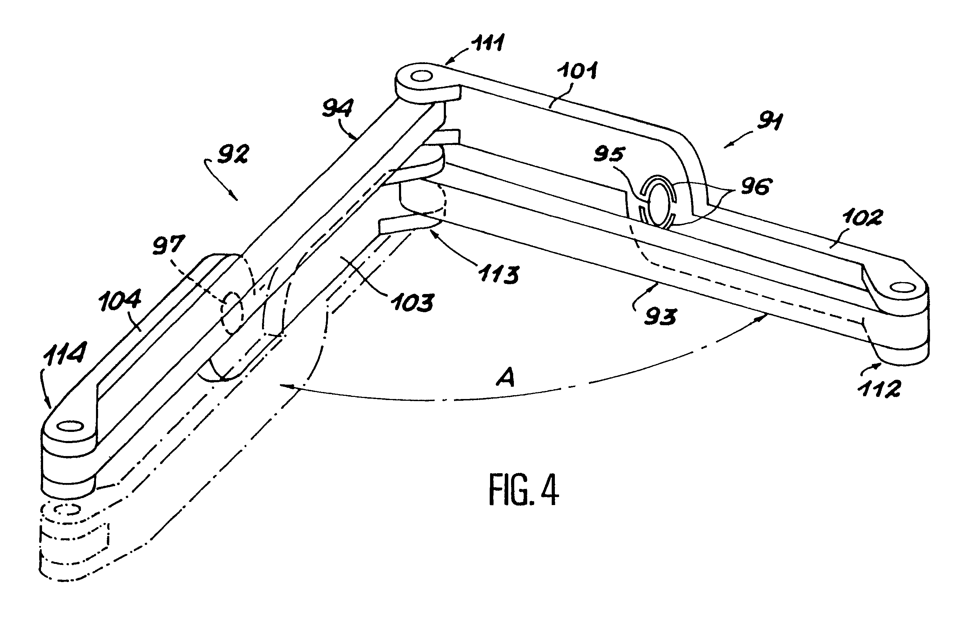

En temps normal, la liaison entre deux modules M voisins est assurée par une charnière 20 illustrée en détail figures 4, 5 et 6. Elle comprend deux barres coudées 91 et 92 et deux barres de liaison 93 et 94 rectilignes. Une barre coudée 92 est fixée rigidement à la traverse 19 du châssis avant 7 d'un module M, l'autre barre coudée 91 peut être reliée au raccordement 76 du module M immédiatement précédent par une liaison permettant une rotation de roulis. Par exemple, le raccordement 76 est enfoncé à travers un trou 95 au centre de la barre coudée 91, après quoi on installe deux demi-couronnes 96 sur la face avant de la barre coudée 91 pour opérer un rétrécissement du trou 95 et maintenir ainsi un épaulement 81 (voir Fig. 3) du raccordement 76 en arrière des deux demi-couronnes 96.

Un second trou 97 est opéré vis-à-vis du précédent sur l'autre barre coudée 92 pour laisser passer les mors 75.

Les barres coudées 91 et 92 comprennent en fait deux portions horizontales et réunies autour des trous 96 et 97 par un décrochement vertical ou oblique : la partie horizontale gauche 101 est ainsi un peu au-dessus de la partie horizontale droite 102 chez la barre coudée 91, mais la partie horizontale droite 104 est un peu au-dessus de la partie horizontale gauche 103 chez l'autre barre coudée 92 située à l'arrière. Les quatre parties horizontales 101 à 104 sont pourvues chacune d'une chape 111 à 114 à leur extrémité libre ; ces chapes 111 à 114 s'étendent vers l'avant pour la barre coudée 92 et vers l'arrière pour la barre coudée 91, et elles reçoivent à pivotement les extrémités de la barre rectiligne 93 pour les chapes 112 et 113, de l'autre barre rectiligne 94 pour les chapes 111 et 114.

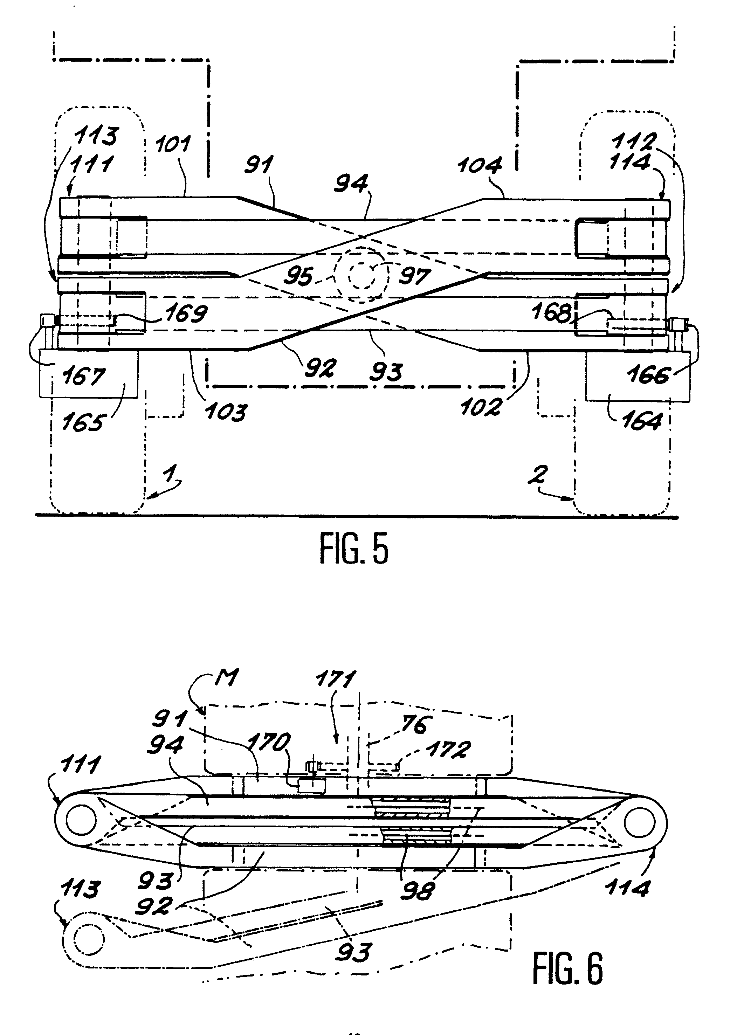

Comme le montrent les figures, deux chapes restent obligatoirement superposées, c'est-à-dire que la disjonction des deux modules M est empêchée. D'après les figures 5 et 6 (trait plein), les chapes 111 et 114 peuvent être au-dessus des chapes 113 et 112 respectivement, et c'est le cas lorsque les modules M se déplacent en ligne droite. D'après la figure 4 la chape 111 peut être au-dessus de la chape 113 alors que les chapes 112 et 114 sont écartées, la première restant solidaire du module M en avant et la seconde restant solidaire du module M en arrière. C'est le cas lorsque le véhicule vire vers la gauche. Une autre configuration est représentée en pointillés sur la figure 6, qui correspond au cas où le véhicule tourne à droite et d'après lequel les chapes 112 et 114 sont superposées alors que les chapes 111 et 113 sont écartées.

Il en résulte que la charnière 20 est une liaison rigide des deux modules M en translation mais autorise tous les virages du véhicule, à l'exception du cas où les mors 75 sont rabattus et appliqués sur le raccordement 76. Comme les chapes 111 à 114 sont situées juste derrière les roues 1 et 2, il existe peu de contraintes d'encombrement, et les barres coudées 91 et 92 peuvent en principe s'ouvrir jusqu'à faire un angle d'ouverture A, ou angle de lacet entre deux modules M (figure 4), pour lequel les modules M réunis par la charnière 20 sont roue contre roue. Dans la pratique, les efforts transmis par la charnière 20 font virer les modules M sans discontinuité brusque de vitesse angulaire, et on doit s'attendre à ce que les angles d'ouverture A ne dépassent pas 90°, ce qui permet malgré tout des virages à très faible rayon de courbure qui rendent le véhicule apte à franchir, par exemple, des angles de corridors.

Les charnières 20 peuvent être utilisées également pour contenir et protéger des câbles ou conduites 98 joignant deux modules M adjacents ; les câbles ou conduites 98 passent alors par l'intérieur de l'une ou l'autre des barres rectilignes 93 et 94 et en ressortent à leurs extrémités.

Les charnières 20 peuvent être en option équipées d'actionneurs ou de moteurs à transmission débrayable. Deux moteurs 164 et 165 sont par exemple fixés sous les chapes 112 et 113 respectivement aux barres coudées 91 et 92 ; chacun actionne une transmission débrayable 166 ou 167 composée de roues dentées engrenant une couronne dentée 168 ou 169 à chaque extrémité de la barre horizontale inférieure 93. Quand le moteur 164 (165) est mis en marche, il modifie ainsi l'angle entre la barre coudée 91 (92) et la barre horizontale inférieure 93. Un moteur 170 peut pareillement être disposé en avant de la barre coudée avant 91 pour agir, au moyen d'une transmission débrayable 171, sur une couronne dentée 172 établie sur le raccordement 76. Le moteur 170 permet donc de modifier l'angle de roulis entre les deux modules M entre lesquels il est installé.

D'une façon générale, ces moteurs 164, 165 et 170 sont au repos et leurs transmisssions débrayées afin de respecter la souplesse de la liaison par les charnières 20 ; leur intérêt dans certains cas sera expliqué plus loin.

La figure 7 est une silhouette qui donne les proportions du module M dans une réalisation effective, et qui permet d'apprécier sa compacité et l'absence de volume inutilisé : la surface que le module M occupe est à peu près carrée et aucun appendice ne dépasse.

Le conteneur 69 peut être posé sur la plate-forme 9 par l'intermédiaire d'éléments de suspension 173, au nombre de quatre et disposés aux quatre coins d'un conteneur 69 de section carrée, et qui peuvent être passifs (ressorts) pour filtrer les chocs et vibrations ou actifs (vérins) pour incliner latéralement le conteneur 69 et le maintenir vertical si les roues 1 et 2 ne sont pas au même niveau.

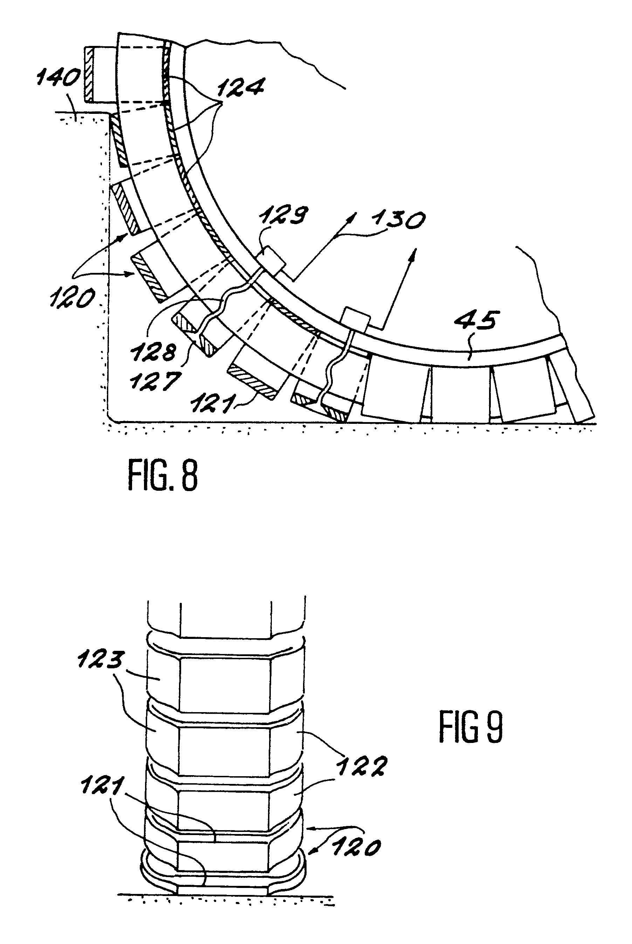

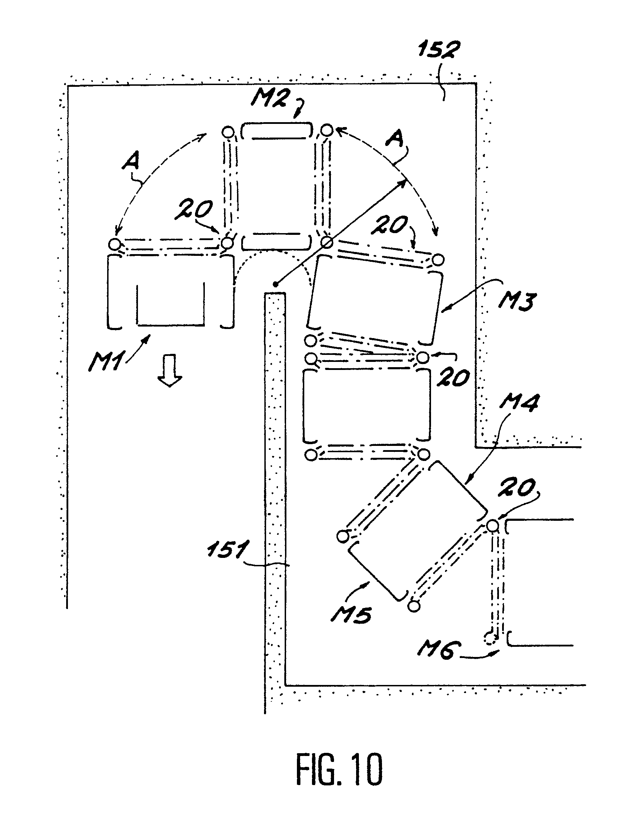

Les figures 8 et 9 illustrent la constitution des roues 1 et 2. La jante 45 est munie extérieurement d'éléments de roulement 120 formés d'une semelle 121 entrant en contact avec le sol, de deux flancs transversaux élastiques 122 et 123 et d'une portée de fixation 124, fixée à la jante 45 et reliée à la semelle 121 par les deux flancs 122 et 123.

Certains des éléments de roulement 120 peuvent recevoir une ventouse 127, qui est alors installée dans un évidement central de la semelle 121. Un tuyau flexible d'aspiration 128 relie la ventouse 127 à une pompe 129 placée sur la face interne de la jante 45. La portée de fixation 124 et la jante 45 sont percées pour permettre le passage du tuyau flexible d'aspiration 128. La pompe 129 est commandée par une ligne 130 qui la relie au système de pilotage et qui passe par l'intérieur de la jante 45 et du disque plein 46 de la roue 1 ou 2 pour rejoindre l'essieu 3.

Les éléments de roulement 120 se déforment sous le poids du module M quand ils entrent en contact avec le sol et doivent donc posséder une résistance et une élasticité suffisante, en particulier les flancs transversaux 122 et 123 soumis à de la flexion.

Ces derniers sont donc en acier. Les semelles 121 comprennent une monture d'acier revêtue, pour la partie en contact avec le sol, d'une couche antidérapante de matériau élastique présentant des sculptures.

En outre, les éléments de roulement 120 sont utiles pour s'appuyer sur des nez de marche 140, sur lesquels ils entrent en contact par l'arrière des semelles 121 et des flancs 122 et 123. Ils doivent donc être assez résistants pour permettre de soulever le module M du sol.

Des ventouses 127 peuvent être utilisées pour accroître l'adhérence au sol du véhicule constitué de plusieurs modules M assemblés dans le cas d'une forte pente sur un sol lisse (vitre, mur).

Les éléments de roulement 120 ici décrits constituent une réalisation préférée de l'invention, mais non la seule. Il est évident que l'on peut aussi employer, pour de nombreuses utilisations, des pneus ordinaires à chambre à air. Pour certains types de sol, des pneus munis de dents, de crampons ou de crochets peuvent également être préconisés pour favoriser, comme les ventouses 127, l'adhérence au sol.

On va maintenant décrire le fonctionnement du véhicule articulé formé par l'assemblage de plusieurs modules M à l'aide des dernières figures. Il importe pour cela de se souvenir que les moteurs de roues 35 et 36 fonctionnent indépendamment et qu'ils sont, ainsi que le moteur de châssis 39, débrayables ou embrayables à volonté. D'une façon générale, le fonctionnement du véhicule s'effectue automatiquement par un système de pilotage embarqué qui réagit aux indications de capteurs et qui comprend un ordinateur.

Dans le cas de la figure 10, le véhicule est formé de six modules M1 à M6, M1 désignant le module M de tête ou premier module et M6 le module M de queue ou sixième module (les modules M2, M3, M4 et M5 sont appelés modules intermédiaires), et il doit passer dans un corridor présentant successivement un quart de tour à droite 151 et un demi-tour à gauche 152. La largeur du corridor est environ 1,5 ou 2 fois plus grande que la largeur des modules M. Mais on voit que le passage d'un tel obstacle est parfaitement possible : ici le module de tête M1 vient de passer le demi-tour à gauche 152 par un ralentissement de la roue gauche 1, et des troisième et quatrième modules M3 et M4 sont encore entre le quart de tour à droite 151 et le demi-tour à gauche 152 : leur sens de déplacement est sensiblement opposé à celui du module de tête M1. Le deuxième module M2 a accompli environ la moitié du demi-tour à gauche 152 et son sens de déplacement est intermédiaire entre ceux des modules de tête M1 et troisième module M3 ; le module de queue M6, qui n'a pas encore abordé le quart de tour à droite 151, a à peu près le même sens de déplacement que le deuxième module M2, et le cinquième module M5 dans le quart de tour à droite 151 a un sens de déplacement intermédiaire entre ceux des quatrième et sixième modules M4 et M6.

On constate la très grande souplesse du véhicule qui, quelle que soit sa longueur, peut virer avec un rayon de courbure très réduit. Cet effet est dû aux charnières 20 et à leurs grandes possibilités d'ouverture : celles reliant le deuxième module M2 aux modules de tête M1 et au troisième module M3 sont simultanément, dans cet exemple, ouvertes d'un angle A proche de l'angle droit.

Une caractéristique remarquable est liée au fait que seuls les moteurs de roues 35 et 36 du module de tête M1 sont pilotés et actifs : les autres modules M2 à M6 suivent passivement, comme des remorques, sous l'action des charnières 20, mais les roues peuvent être motrices et non pilotées par un système central. Elles peuvent par exemple réagir aux efforts de contact avec le sol, et leur vitesse de rotation réglée interactivement pour ne pas patiner. Malgré cela, tous les modules sont amenés à passer pratiquement par les traces du module de tête M1, ce qui est d'une importance capitale dans le cas de corridors resserrés où le frottement contre les murs causerait des endommagements ou même le blocage du véhicule. Ce bénéfice est encore dû aux charnières 20, qui fonctionnent comme de simples pivots, alors que des dispositifs d'attelage constitués par une barre ou un câble centraux ne permettent pas de l'obtenir.

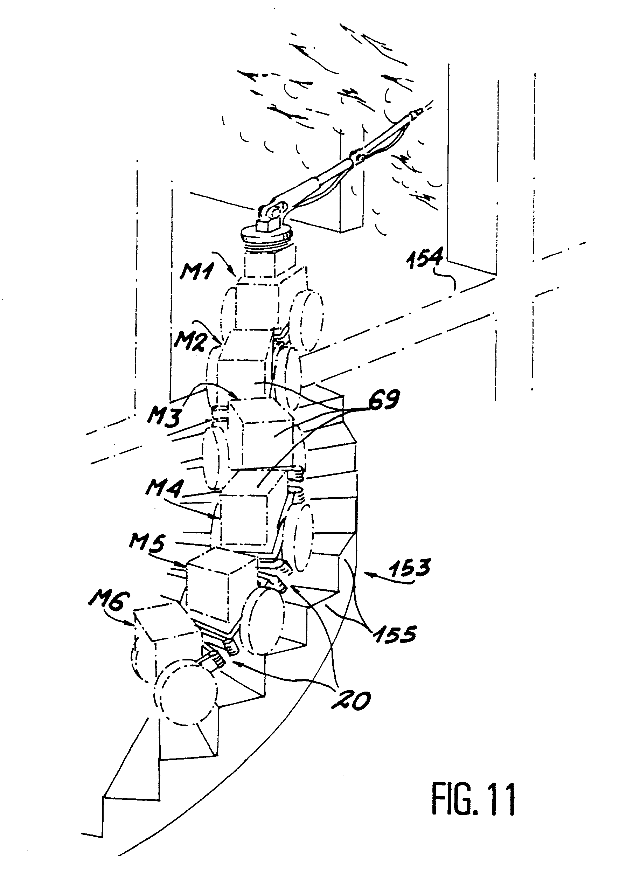

La figure 11 représente un cas différent de fonctionnement : le véhicule est ici en train d'escalader un escalier en hélice 153 terminé par un palier 154 que le module de tête M1 a déjà atteint. Il est ici important de disposer d'une puissance suffisante, et c'est pourquoi les moteurs de roues 35 et 36 sont mis en action dans plusieurs modules M à la fois, selon les décisions prises par le système de pilotage.

Les différents modules M escaladent une marche 155 de l'escalier 153 à des instants différents, et leurs roues 1 et 2 peuvent même franchir une seule marche 155 avec un décalage temporel, ce qui est le cas ici pour le deuxième module M2 qui doit effectuer un virage à droite juste avant d'arriver sur le palier 154. Il est donc nécessaire de disposer de degrés de liberté de roulis entre les modules M, ce qui justifie l'existence des raccordements 76 tournant dans les trous 95. De plus, les moteurs de châssis 39 sont tous débrayés, ce qui fait que les angles des châssis avant 7 et arrière 8 de tous les modules M peuvent varier constamment tout en étant différents entre eux.

En revanche, les moteurs de plate-forme 41 sont mis en marche pour corriger constamment l'inclinaison de la charge 69 à l'aide du détecteur de tangage 71 : il est en effet essentiel que le conteneur 69 soit à la verticale des essieux 3 pour assurer la stabilité du véhicule dans ces passages délicats.

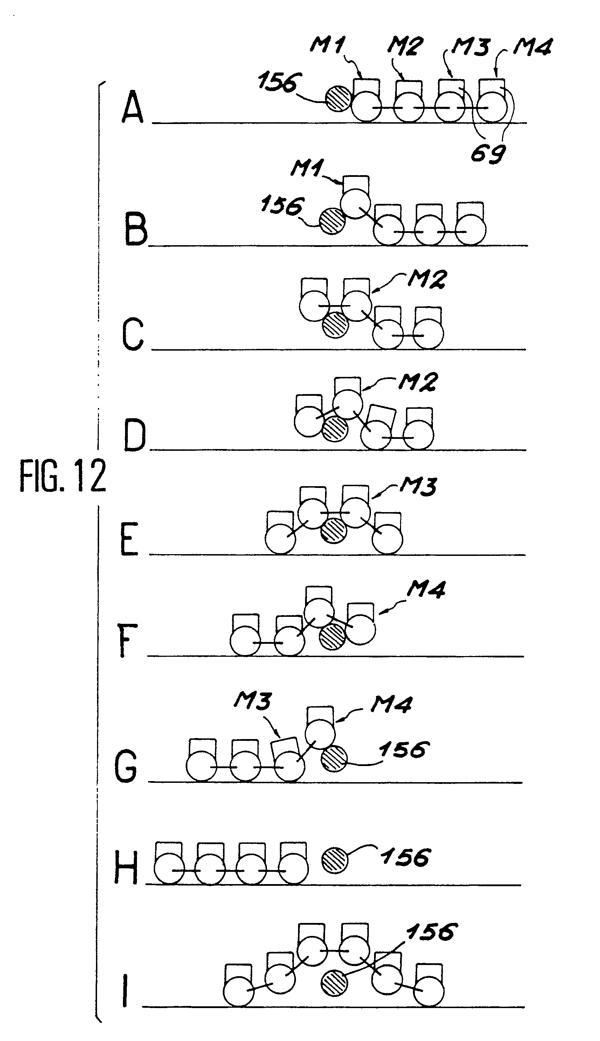

Le franchissement d'un obstacle ponctuel et escarpé est expliqué par les figures 12A à 12I. Une conduite 156 est au-dessus du sol et perpendiculaire au déplacement du véhicule (12A). L'intervalle entre le sol et la conduite 156 est insuffisant pour permettre au véhicule de passer sous cette dernière. Le système de pilotage agit alors sur le moteur de châssis 39 du deuxième module M2 de manière à relever son châssis avant 7 et à soulever le module de tête M1 du sol (12B). Ensuite, des actions analogues sont entreprises sur les moteurs de châssis 39 des modules suivants M3, M4, M5,... Le module de tête M1 finit par s'élever au-dessus de la conduite 156 (12C) et à passer au-dessus car la marche en avant du véhicule se poursuit pendant ce temps. Les moteurs de châssis 39 des premiers modules M2, M3, ... sont alors remis en action en sens inverse pour rabaisser les châssis avant 7 qui avaient été relevés les premiers (12D). Ce processus s'effectue jusqu'à ce que le module de tête M1 s'abaisse et reprenne finalement contact avec le sol par-delà la conduite 156 (12E).

Les modules de queue peuvent être soulevés du sol à leur tour quand on dispose d'un appui suffisant à l'avant du véhicule (12F). Ils passent ensuite l'obstacle (12G) avant d'être finalement rabaissés (12H). Au cours de ces opérations, les conteneurs 69 des modules M sont encore maintenus verticaux, sauf si un module adjacent surplombe trop, auquel cas on incline le conteneur 69 concerné, par exemple celui du module M3 de la figure 12G, de manière à l'abaisser et à éviter ainsi un heurt avec les roues ou le châssis du module surplombant.

Les modules M sont ainsi soulevés les uns après les autres par-dessus la conduite 156 à l'aide des modules adjacents. Le véhicule prend une allure d'arche qui enveloppe l'obstacle. On a supposé sur la figure 12I que les roues des modules soulevés n'entraient pas en contact avec l'obstacle à franchir, ici la conduite 156. Il est cependant possible, pour améliorer la stabilité d'ensemble et diminuer les efforts, de les y faire reposer comme c'est le cas sur les figures 12A à 12H qui représentent un véhicule à quatre modules au lieu de six sur la figure 12I. Le module de tête M1 est alors progressivement abaissé quand il commence à surplomber l'obstacle jusqu'à ce qu'il le touche, avant de continuer à redescendre quand il l'a franchi. Le reste du processus est inchangé.

Il faut toutefois admettre que cette méthode de franchissement d'obstacles, qui est utilisable aussi pour un muret, des rails ou une rigole étroite et profonde par exemple (dans ce dernier cas, il est évidemment inutile de soulever les modules M), nécessite un nombre de modules M suffisant pour maintenir la stabilité du véhicule dans les phases initiale ou finale, quand il ne repose sur le sol qu'à une extrémité. Il est de plus nécessaire de maintenir la stabilité des modules soulevés en bloquant le raccordement 76 par les mors 75, ainsi qu'en agissant sur le moteur de plateforme 41 pour maintenir le conteneur 69 le plus vertical possible comme c'était déjà le cas dans la figure 11.

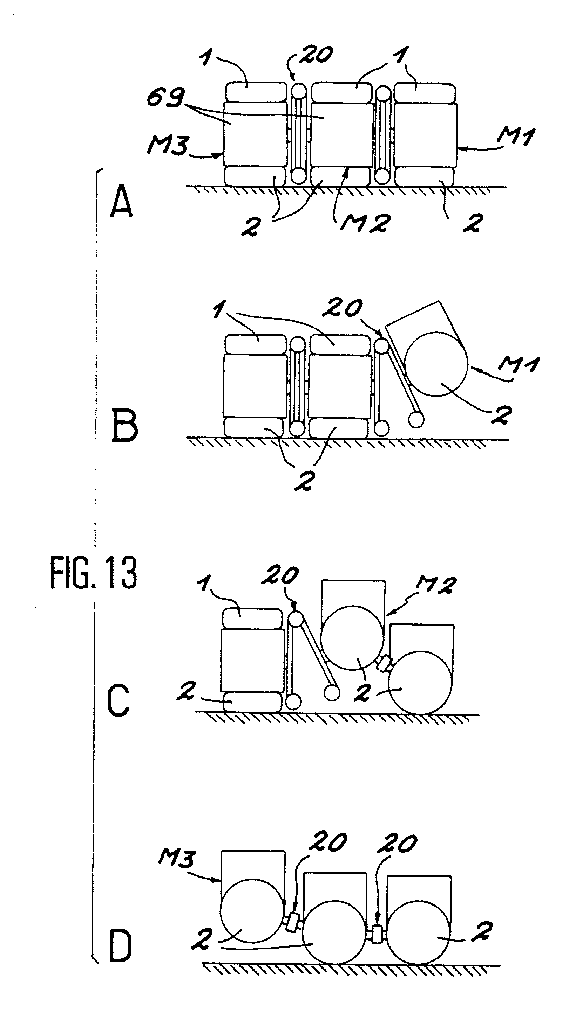

Pour certaines utilisations, il est nécessaire de tenir compte des risques de renversement du véhicule sur le flanc. Les modules M sont alors nécessairement équipés d'actionneurs sur les degrés de liberté de roulis et de lacet. Sur la figure 13A, le véhicule a versé à droite. Les moteurs installés sur la charnière 20 permettent de le redresser en séquence. Le moteur 165 (voir aussi Fig. 5) situé à gauche, sous la chape 113, de la charnière 20 unissant les modules de tête M1 et M2 est actionné pour soulever quelque peu le module de tête M1 du sol ; simultanément le moteur de roulis 170 (voir aussi Fig. 6) redresse le module de tête (13B), après quoi le moteur 165 est relâché pour remettre le module de tête M1 sur le sol. On redresse les modules suivants par des actions analogues après avoir en outre relevé le châssis arrière 8 du module précédemment relevé pour mieux soulever le module suivant du sol (13C). Finalement le module de queue, M3 d'après la figure 13D, est relevé en actionnant les moteurs de la charnière 20 qui l'unit au module précédent, dont le châssis arrière 8 est en outre relevé.

Il va sans dire que les nombreux aménagements apportés aux modules M et au véhicule articulé qu'ils constituent ne sont pas toujours indispensables et que leur présence ou leur exclusion doit être décidée en fonction des types d'obstacles rencontrés. Sur un sol parfaitement lisse et plat, il n'y a pas besoin de châssis 6 constitué de deux parties en rotation relative, de degrés de liberté en torsion et de réglage d'inclinaison de plate-forme et de charge, comme on peut le déduire par l'absence de commentaire particulier dans la figure 10. Les ventouses 127 ou les moteurs fixés sur les charnières 20 peuvent, entre autres, être omis. La protection demandée est délimitée par les revendications uniquement.

Les missions imparties au véhicule peuvent être fort nombreuses : manutention de charges, exploration, inspection ou travail dans des milieux hostiles ou dangereux, que le véhicule soit absolument autonome ou accompagné par des hommes dont il est alors l'auxiliaire. Elles peuvent s'effectuer à l'intérieur de bâtiments ou sur des sols naturels divers. Sur la figure 11, la plus expressive de ce point de vue, on a supposé qu'il était destiné à éteindre un incendie dans un bâtiment. Les conteneurs 69 sont évidemment constitués en conséquence et peuvent par exemple être munis d'outils manipulables, d'instrumentation et d'électronique de mesure, de systèmes optiques, de réservoirs ou même d'habitacles pour des modules de grande taille.

## Revendications

1. Elément modulaire (M) de véhicule articulé comprenant un châssis (6) de forme générale rectangulaire et comprenant des portions avant, arrière, gauche et droite, deux essieux (3) concourants d'axe transversal, porteurs d'une roue (1, 2) chacun et tournant indépendamment dans des premiers paliers (17 et 27, 18 et 28) situés respectivement sur les portions gauche et droite, une motorisation (35, 36) débrayable agissant sur les roues, quatre articulations d'axe vertical (111 à 114) situées à des extrémités gauche et droite des portions avant et arrière, lesdites articulations étant destinées à recevoir des barres articulées (93, 94) d'attelage avec des éléments modulaires M adjacents semblables, caractérisé en ce qu'il comprend une plate-forme (9) en rotation autour des essieux (3) dans deux deuxièmes paliers (30) par rapport au châssis (6) ainsi qu'un système de réglage, comprenant un moteur de plate-forme (41) et un détecteur (71) de cette rotation, le châssis (6) étant constitué de deux parties (7, 8) articulées entre elles autour d'un axe X parallèle aux essieux, cet axe étant de préférence confondu avec l'axe des essieux (3), selon un angle de déformation variable.

2. Elément modulaire de véhicule articulé suivant la revendication 1, caractérisé en ce qu'il comprend un moteur débrayable (39) permettant de faire varier l'angle de déformation des deux parties du châssis (7, 8).

3. Elément de véhicule articulé suivant l'une des revendications 1 ou 2, caractérisé en ce que la motorisation débrayable (35, 36) agissant sur les roues est constituée de deux moteurs agissant chacun sur une roue (1, 2) respective.

4. Elément modulaire de véhicule articulé suivant l'une quelconque des revendications 1 à 3, caractérisé en ce que les articulations pour barres articulées sont disposées sur des traverses (91, 92) respectives sur les portions avant et arrière du châssis, l'une des traverses (91) pivotant par rapport au châssis autour d'un axe horizontal perpendiculaire aux essieux (3) et situé à mi-chemin des articulations gauche et droite.

5. Elément modulaire de véhicule articulé suivant la revendication 4, caractérisé en ce qu'il comprend un système de blocage (75, 76) du pivotement de la traverse (91) par rapport au châssis (6).

6. Elément modulaire de véhicule articulé suivant l'une quelconque des revendications 1 à 5, dans lequel les roues comprennent un disque plein (46) lié à une extrémité d'une jante (45) cylindrique, les roues étant disposées à l'extérieur du châssis (6), caractérisé en ce que les jantes (45) sont orientées vers l'intérieur et abritent les moteurs (35, 36, 39, 41).

7. Elément modulaire de véhicule articulé suivant l'une quelconque des revendications 1 à 6, caractérisé en ce que les roues (1, 2) possèdent des éléments de roulement (120) munis d'éléments (127) favorisant leur adhérence au sol.

8. Elément modulaire de véhicule articulé suivant l'une quelconque des revendications 1 à 7, caractérisé en ce qu'il comprend une suspension (173) sur la plate-forme (9), reliant la plate-forme à un conteneur (69).

9. Elément modulaire de véhicule articulé suivant la revendication 8, caractérisé en ce que la suspension (173) est formée de vérins susceptibles d'incliner latéralement le conteneur (69).

10. Véhicule articulé, caractérisé en ce qu'il est constitué de plusieurs des éléments modulaires M de véhicule articulé conformes à l'une quelconque des revendications précédentes assemblés en chaîne de façon à définir un élément modulaire de tête, un élément modulaire de queue et des éléments modulaires intermédiaires, d'attelages assemblant les éléments et constitués chacun de deux barres articulées (93, 94) aux deux extrémités, une première barre (94) sur l'articulation gauche (111) de la portion arrière du châssis d'un élément modulaire de véhicule antérieur et sur l'articulation droite (114) de la portion avant du châssis d'un élément modulaire de véhicule postérieur, une seconde barre (93) sur l'articulation droite (112) de la portion arrière du châssis de l'élément modulaire de véhicule antérieur et sur l'articulation gauche (113) de la portion avant du châssis de l'élément modulaire de véhicule postérieur, et d'un système de pilotage d'ensemble permettant d'agir sur les moteurs et de commander leur débrayage.

11. Véhicule articulé modulaire suivant la revendication 10, caractérisé en ce que les barres articulées (93, 94) sont liées à leurs articulations en translation verticale et permettent ainsi à un élément modulaire M d'être soutenu ou soulevé par les éléments modulaires M adjacents.

12. Véhicule articulé modulaire suivant la revendication 11, caractérisé en ce que les barres articulées sont creuses et renferment des conduits de connexion (98) joignant les éléments modulaires auxquels elles sont attelées.

13. Véhicule articulé modulaire suivant la revendication 12, caractérisé en ce qu'il comprend des actionneurs (170, 164, 165) sur les attelages permettant de modifier des angles de roulis et de lacet A entre les deux éléments modulaires reliés par les attelages.

## Ansprüche

1. Modulares Element M für ein Gelenkfahrzeug mit einem Fahrgestell (6) allgemein rechtwinkliger Form und mit vorderen, hinteren, linken und rechten Bereichen, zwei Wagenachsen (3), die durch denselben Punkt einer transversalen Achse gehen und jeweils ein Rad (1, 2) tragen und sich unabhängig in ersten Radlagern (17 und 27, 18 und 28) drehen, die sich jeweils In den ersten und zweiten Bereichen befinden, einer entkuppelbaren Motorisierung (35, 36), die auf die Räder wirkt, vier Gelenke mit vertikaler Achse (111 bis 114), die sich an linken und rechten Enden der vorderen und hinteren Bereiche befinden, wobei die Gelenke dazu bestimmt sind, Gelenkstangen (93, 94) zum Verkuppeln mit gleichen, benachbarten, modularen Elementen aufzunehmen, dadurch gekennzeichnet, daß es eine um die Wagenachsen (3) in zwei zweiten Radlagern (30) bezüglich dem Fahrgestell (6) drehbare Plattform ebenso wie ein Regelsystem aufweist, das einen Motor (41) für die Plattform und einen Detektor (71) für diese Drehung umfaßt, wobei das Fahrgestell (6) aus zwei Teilen (7, 8) besteht, die untereinander gelenkig um eine zu den Radlagern parallele Achse X verbunden sind, wobei diese Achse vorzugswelse mit der Achse der Wagenachsen (3) zusammenfällt.

2. Modulares Element für ein Gelenkfahrzeug nach Anspruch 1, dadurch gekennzeichnet, daß es einen entkuppelbaren Motor (39) umfaßt, der ermöglicht, den Verformungswinkel der beiden Teile (7, 8) des Fahrgestells zu varlieren.

3. Modulares Element für ein Gelenkfahrzeug nach Anspruch 1 oder 2, dadurch gekennzeichnet, daß die entkuppelbare Motorislerung (35, 36), die auf die Räder wirkt, aus zwei Motoren besteht, die jeweils auf ein Rad (1, 2) wirken.

4. Modulares Element für ein Gelenkfahrzeug nach einem der Ansprüche 1 bis 3, dadurch gekennzeichnet, daß die Gelenkverbindung für Gelenkstangen auf jeweiligen Traversen (91, 92) auf den vorderen und hinteren Bereichen des Fahrgestells angeordnet sind, wobei sich eine der Traversen (91) bezüglich dem Fahrgestell um eine horizontale Achse senkrecht zu den Wagenachsen (3) und auf dem halben Weg zwischen den linken und rechten Gelenkverbindungen angeordnet dreht.

5. Modulares Element für ein Gelenkfahrzeug nach Anspruch 4, dadurch gekennzeichnet, daß es ein System (75, 76) zum Blockieren der Traverse (91) bezüglich dem Fahrgestell (6) umfaßt.

6. Modulares Element für ein Gelenkfahrzeug nach einem der Ansprüche 1 bis 5, bei dem die Räder eine volle Scheibe (46) umfassen, die mit einem Ende einer zylindrischen Felge (45) verbunden ist, wobei die Räder außerhalb des Fahrgestells (6) angeordnet sind, dadurch gekennzeichnet, daß die Felgen (45) nach Innen gerichtet sind und die Motoren beherbergen (35, 36, 39, 41).

7. Modulares Element für ein Gelenkfahrzeug nach einem der Ansprüche 1 bis 6, dadurch gekennzeichnet, daß die Räder (1, 2) Rollelemente (120) besitzen. die mit Elementen (127) versehen sind, die Ihre Bodenhaftung begünstigen.

8. Modulares Element für ein Gelenkfahrzeug nach einem der Ansprüche 1 bis 7, dadurch gekennzeichnet, daß es eine Aufhängung (173) auf der Plattform (9) umfaßt, die die Plattform mit einem Behälter (69) verbindet.

9. Modulares Element für ein Gelenkfahrzeug nach Anspruch 8, dadurch gekennzeichnet, daß die Aufhängung (173) aus Winden besteht, die geeignet sind, den Behälter (69) lateral zu neigen.

10. Gelenkfahrzeug, dadurch gekennzeichnet, daß es aus mehreren modularen Elementen M für ein Gelenkfahrzeug nach einem der vorhergehenden Ansprüche, die derart in einer Reihe angeordnet sind, daß sie ein modulares Kopfelement, ein modulares Schwanzelement und modulare Zwischenelemente, bilden, aus Kupplungen, die die Elemente verbinden und jeweils aus zwei an den beiden Enden gelenkig verbundenen Stangen (93, 94) bestehen, nämlich einer ersten Stange (94) auf dem linken Gelenk (111) des hinteren Bereichs des Fahrgestells eines modularen Elements des vorderen Fahrzeugs und auf dem rechten Gelenk (114) des vorderen Bereichs des Fahrgestells eines modularen Elements des hinteren Fahrzeugs und einer zweiten Stange (93) auf dem rechten Gelenk (112) des hinteren Bereichs des Fahrgestells des modularen Elements der vorderen Fahrzeugs und auf dem linken Gelenk (113) des vorderen Bereichs des Fahrgestells des modularen Elements des hinteren Fahrzeugs, und aus einem Steuerungssystem für die Anordnung besteht, die ermöglicht, auf die Motoren zu wirken und Ihr Entkuppeln zu steuern.

11. Modulares Gelenkfahrzeug nach Anspruch 10, dadurch gekennzeichnet, daß die gelenkig verbundenen Stangen (93, 94) mit Ihren Gelenken in vertikaler Translation verbunden sind und so einem modularen Element M ermöglichen, von den benachbarten, modularen Elementen gehalten oder hochgehoben zu werden.

12. Modulares Gelenkfahrzeug nach Anspruch 11, dadurch gekennzeichnet, daß die gelenkig verbundenen Stangen hohl sind und Verbindungsrohre (98) umschließen, die die modularen Elemente, mit denen sie verkuppelt sind, verbinden.

13. Modulares Gelenkfahrzeug nach Anspruch 12, dadurch gekennzeichnet, daß es Stellglieder (170, 164, 165) auf den Kupplungen umfaßt, die ermöglichen, die Roll- und Scharnierwinkel A zwischen den beiden über die Kupplungen verbundenen Elemente zu verändern.

**Claims**

1. Modular element M for an articulated vehicle incorporating a generally rectangular chassis (6) and having front, rear, left and right portions, to concurrent, transversely axed axials (3), which in each case carry a wheel (1, 2) and rotate independently in first bearings (17, 27, 18, 28) respectively located on the left and right portions, a disengageable motor mechanism (35, 36) acting on the wheels, four vertically axed articulations (111 to 114) located at the left and right ends of the front and rear portions, said articulation serving to receive articulated bars (93, 94) for coupling to similar adjacent modular elements M, characterized in that it comprises a platform (9) rotating about axles (3) in two second bearings (30) with respect to the chassis (6), as well as a regulating system incorporating a platform motor (41) and a detector (71) of said rotation, the chassis (6) being constituted by two portions (7, 8) articulated to one another about an axis parallel to the axles, said axis preferably coinciding with the axis of the axles (3), in accordance with a variable deformation angle.

2. Modular element for articulated vehicle according to claim 1, characterized in that it comprises a disengageable motor (39) making it possible to vary the deformation angle of the two portions of chassis (7, 8).

3. Modular element of articulated vehicle according to claims 1 or 2, characterized in that the disengageable motor mechanism (35, 36) acting on the wheels is constituted by two motors, each acting on a respective wheel (1, 2).

4. Modular element of articulated vehicle according to any one of the claims 1 to 3, characterized in that the articulations for the articulated bars are located on respective cross-beams (91, 92) on front and rear portions of the chassis, one of the cross-beams (91) pivoting with respect to the chassis about a horizontal axis perpendicular to the axles (3) and located midway between the left and right articulations.

5. Modular element of articulated vehicle according to claim 4, characterized in that it comprises a system (75, 76) for blocking the pivoting of cross-beam (91) with respect to chassis (6).

6. Modular element of articulated vehicle according to any one of the claims 1 to 5, in which the wheels have a solid disk (46) connected to one end of a cylindrical rim (45), the wheels being located outside chassis (6), characterized in that the rims (45) are oriented inwards and protect the motors (35, 36, 39, 41).

7. Modular element of articulated vehicle according to any one of the claims 1 to 6, characterized in that the wheels (1, 2) have rolling elements (120) provided with elements (127) aiding their adhesion to the ground.

8. Modular element of articulated vehicle according to any one of the claims 1 to 7, characterized in that it comprises a suspension (173) on platform (9) connecting the latter to a container (69).

9. Modular element of articulated vehicle according to claim 8, characterized in that the suspension (173) is formed by jacks able to laterally incline container (69).

10. Articulated vehicle, characterized in that it is constituted by several articulated vehicle modular elements M according to any one of the preceding claims, assembled in chain-like manner, so as to define a head module, a tail module and intermediate modules, couplings assembling the same and each constituted by two articulated bars (93, 94) at the two ends, a first bar (94) on the left articulation (111) of the rear portion of the chassis of a front vehicle module and on the right articulation (114) of the front portion of the chassis of a rear vehicle module, a second bar (93) on the right articulation (112) of the rear portion of the chassis of the front vehicle module and on the left articulation (113) of the front portion of the chassis of the rear vehicle module, as well as an overall control system making it possible to act on the motors and control their disengagement.

11. Modular articulated vehicle according to claim 10, characterized in that the articulated bars (93, 94) are attached to their articulations in vertical translation and thus enable a module M to be supported or raised by adjacent modules M.

12. Modular articulated vehicle according to claim 11, characterized in that the articulated bars are hollow and contain connecting ducts (98) joining the modular elements to which they are coupled.

13. Modular articulated vehicle according to claim 12, characterized in that it comprises actuators (170, 164, 165) on couplings making it possible to modify the roll and yaw angles A between the two modular elements connected by the couplings.

# FIG. 1

FIG. 2A

FIG. 2B

FIG. 3

FIG. 4

EP 0 305 299 B1

FIG. 5

FIG. 6

FIG. 7

FIG. 8

FIG 9

FIG. 10

M1
M2
M3
M4
M5
M6
69
154
153
155
20

FIG. 11

FIG. 12

FIG. 13